# FASCICULE DE BREVET EUROPEEN

(11) **EP 0 998 648 B1**
(45) Date de publication et mention de la délivrance du brevet: **12.12.2001**
(21) Numéro de dépôt: 98925737.3
(22) Date de dépôt: 19.05.1998
(51) Int. Cl.: F23D 14/30, F23D 14/14, F23D 14/64, F23D 14/82, F24C 1/12, A01K 31/19

(54) **APPAREIL DE CHAUFFAGE**
HEIZGERÄT
HEATING APPARATUS

(30) Priorité: 23.05.1997 FR 9706319; 23.05.1997 FR 9706320
(43) Date de publication de la demande: 10.05.2000
(73) Titulaire: 4E Systel, La Ménardais 44119 (FR)
(72) Inventeur: GAUDIN, Jean-Marc, F-44119 Treillières (FR)
(74) Mandataire: Dawidowicz, Armand
(86) Numéro de dépôt international: FR9800990
(87) Numéro de publication internationale: WO9853249

(56) Documents cités:
- EP-A- 0 059 153
- EP-A- 0 382 286
- EP-A- 0 686 808
- CH-A- 432 770
- CH-A- 687 938
- DE-A- 3 727 425
- DE-U- 29 610 358
- FR-A- 1 387 132
- US-A- 2 336 816
- US-A- 2 985 137

## Description

La présente invention concerne un appareil de chauffage du type infrarouge et s'applique, en particulier, à un appareil de chauffage destiné au secteur agricole pour le chauffage directionnel vers le sol des bâtiments d'élevage.

Les appareils de chauffage du type infrarouge sont aujourd'hui largement utilisés. Ils sont employés à des fins diverses. Parmi leurs nombreuses applications, l'une concerne le chauffage des bâtiments d'élevage. Dans le cas de cette application, les dispositifs de chauffage sont utilisés à l'état suspendu à des rampes aménagées dans lesdits bâtiments d'élevage. La hauteur de suspension des dispositifs de chauffage dans ce genre d'installation est donc un paramètre particulièrement important. Depuis de nombreuses années, on cherche à réduire cette hauteur de suspension de manière à augmenter l'efficacité du dispositif de chauffage et effectuer des économies d'énergie. Parallèlement, les risques d'incendie de telles installations, en particulier par projection de particules de la combustion, sont nombreux. Ces risques sont augmentés d'une part par la présence de nombreuses poussières dans l'atmosphère, d'autre part, par la présence de paille desséchée au sol.

Enfin, ce dispositif de chauffage étant destiné au chauffage d'animaux, il est indispensable de créer des zones où la température est maintenue de manière à peu près homogène et constante en évitant toute création de zone de surchauffe.

Aucun des dispositifs de chauffage développé à ce jour n'a pu satisfaire les exigences décrites ci-dessus de manière optimale. Un appareil de chauffage de type infrarouge développé ces dernières années a tenté, de par sa conception, de pallier aux inconvénients de l'état de la technique. Cet appareil de chauffage, décrit dans le brevet EP-A-0.382.286, est constitué d'un réflecteur, d'un conduit d'alimentation en mélange air/gaz, d'une chambre de combustion et d'une chambre de diffusion, l'ensemble étant organisé autour d'un axe commun correspondant à l'axe du conduit d'alimentation en mélange air/gaz. Le choix du réflecteur constitué d'une coupole de réflexion et le profil des chambres n'ont fait que concourir à un rayonnement concentré et localisé de l'ensemble du dispositif dans une zone de surface réduite située sensiblement en-dessous du dispositif de chauffage. Il en résulte, au sol, un chauffage atteignant une température très élevée dans la zone située directement au-dessous du dispositif de chauffage alors que, dès que l'on s'éloigne de cette zone, la température chute rapidement. Du fait de cette conception liée à la configuration conique des chambres et au réflecteur en forme de coupole, il est nécessaire de multiplier le nombre de dispositifs de chauffage pour obtenir le chauffage d'une grande surface au sol. En outre, il convient dans ce cas d'être particulièrement vigilant au régime de puissance imposé au dispositif de chauffage afin d'éviter d'atteindre des températures trop élevées dans la zone où la chaleur se concentre.

Un autre dispositif de chauffage est décrit dans le brevet suisse CH-A-432.770. Ce dispositif de chauffage comporte un brûleur délimitant au moins un conduit d'alimentation en mélange air/gaz, un réflecteur entourant le conduit, une chambre de combustion du mélange air/gaz située en extrémité du conduit du brûleur et coaxiale au réflecteur et un écran plein situé en-dessous et dans l'axe du conduit du brûleur. Toutefois, cette plaque pleine ne remplit pas la fonction d'écran apte à stopper la chute des particules au sol tout simplement parce que cette plaque pleine est doublée d'un cône perforé ou non dont les parois coniques s'étendent à l'intérieur de la chambre de combustion de telle sorte que les particules glissent le long des parois du cône et sont susceptibles de passer à travers la paroi latérale perforée de la chambre de combustion. En conséquence, un tel dispositif de chauffage ne permet pas d'obtenir toutes les conditions de sécurité requises en la matière.

Un autre dispositif de chauffage infrarouge est décrit dans le brevet FR-A-1.387.132. Ce document décrit dans un exemple de réalisation un dispositif de chauffage comportant un brûleur délimitant au moins un conduit d'alimentation en mélange air/gaz, un réflecteur entourant le conduit et une chambre de combustion dont la face formant fond est constituée d'un écran plat. Toutefois, un tel dispositif de chauffage, du fait d'une part de la conception de la chambre de combustion, d'autre part de la conception du réflecteur, n'apporte pas les qualités de chauffage requises.

Le brevet US-A-2.985.137 décrit un autre dispositif de chauffage pour bâtiment d'élevage dont la conception ne permet pas de résoudre l'un des problèmes connus pour de tels dispositifs, à savoir un confinement d'air chaud à l'intérieur du volume délimité par le réflecteur et par suite une montée en température importante des parois du réflecteur.

Le but de la présente invention est donc de pallier les inconvénients précités en proposant un dispositif de chauffage vers le bas dont la conception permet d'élargir la surface de la zone radiante projetée tout en évitant la création de zones de surchauffe.

Un autre but de la présente invention est de proposer un dispositif de chauffage dont la conception permet de supprimer les risques d'incendie par projection de particules au sol.

Un autre but de la présente invention est de proposer un dispositif de chauffage dont la conception permet de réduire la hauteur de suspension de ce dispositif sans création de zones de surchauffe au sol.

A cet effet, l'invention a pour objet un appareil de chauffage du type infrarouge, notamment destiné au secteur agricole, pour le chauffage directionnel vers le bas des bâtiments d'élevage, cet appareil comprenant au moins un brûleur délimitant au moins un conduit d'alimentation en mélange gaz/air, un réflecteur entourant le conduit sur au moins une partie de sa longueur et une chambre de combustion du mélange air/gaz située en extrémité dudit conduit du brûleur et coaxiale au réflecteur et un écran plein situé en-dessous et dans l'axe du conduit du brûleur, caractérisé en ce que la chambre de combustion du brûleur disposée coaxiale au réflecteur est formée d'une embase coaxiale au conduit du brûleur, cette embase étant prolongée par une paroi périphérique perforée en forme de tronc de cône dont la petite base est constituée par l'écran plein pour, d'une part, stopper la chute de particules émanant de la combustion, et d'autre part, réduire l'intensité du rayonnement axial de l'appareil en supprimant ainsi une surchauffe centrale.

Grâce à la présence de cet écran conformé pour réceptionner les particules et les empêcher d'atteindre le sol, tout risque d'incendie est écarté.

L'invention sera bien comprise à la lecture de la description suivante d'exemples de réalisation, en référence aux dessins annexés dans lesquels :
la figure 1 représente une vue en coupe verticale d'un appareil de chauffage conforme à l'invention et
la figure 2 représente une vue en coupe verticale d'un autre mode de réalisation d'un appareil de chauffage conforme à l'invention.

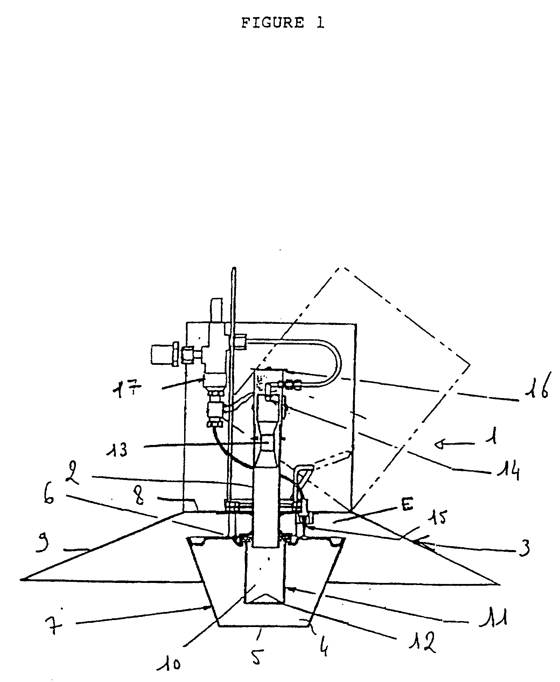

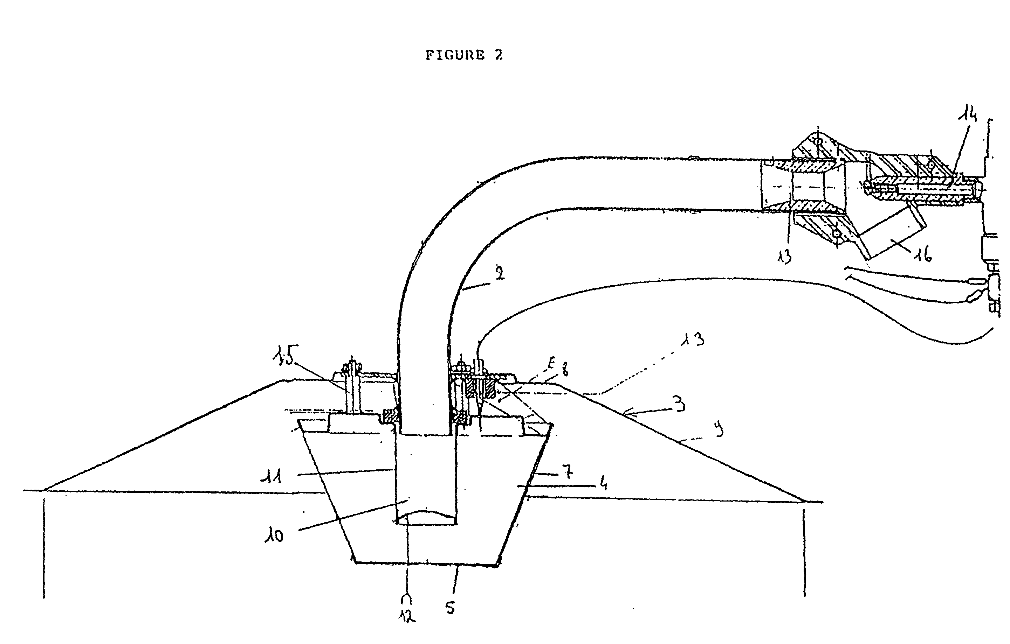

L'invention s'applique aux appareils ou dispositifs de chauffage suspendus à chauffage vers le bas. L'appareil ou dispositif de chauffage, tel que représenté à la figure 1, est plus particulièrement destiné au secteur agricole, pour le chauffage directionnel vers le bas de bâtiments d'élevage. Cet appareil, destiné à être alimenté en gaz, est relié à une source de gaz par des moyens de liaison appropriés. Chaque appareil comporte en outre un brûleur à mélange gaz/air. Ce brûleur est constitué d'un conduit d'alimentation 2 en mélange air/gaz, d'un réflecteur 3 et d'une chambre de combustion 4. Le conduit 2 est doté de façon classique d'un élément venturi 13, d'une chambre de mélange air/gaz et, en amont de ce dernier, d'une embouchure 16 d'entrée pour l'air de combustion primaire et d'un injecteur 14. Le conduit 2 du brûleur affecte généralement la forme d'une pipe coudée dont l'une des branches pénètre partiellement dans le réflecteur 3 au travers d'un orifice central ménagé dans le fond plat 8 de ce réflecteur 3. La deuxième branche du conduit 2 s'étend généralement sensiblement horizontalement. La branche horizontale du conduit 2 porte généralement l'injecteur 14 et l'entrée d'air 16. Une telle forme de conduit est réalisée à la figure 2. Toutefois, toute autre forme de conduit peut être envisagée comme cela est représenté à la figure 1. Dans ce cas, le conduit 2 du brûleur est organisé autour d'un axe vertical, l'injection de gaz s'effectuant axialement au moyen de l'injecteur 14 à l'intérieur du conduit 2 de même que l'entrée d'air de combustion primaire qui s'effectue à travers des ouvertures 16 disposées à l'extrémité haute dudit conduit 2. Dans le cas où l'injecteur de gaz 14 est disposé axialement à l'intérieur du conduit 2 du brûleur, dans la partie haute de ce dernier, et où l'entrée d'air 16 est disposée dans la partie haute du conduit 2, l'air débouche axialement à l'intérieur dudit conduit 2 de telle sorte que l'air et le gaz circulent à l'intérieur du conduit 2 du brûleur suivant une trajectoire essentiellement verticale, empêchant ainsi toute accumulation des poussières contenues dans l'air à l'intérieur dudit conduit 2. La présence de l'écran plein, qui sera décrit ci-dessous, devient alors indispensable. Dans l'exemple de réalisation représenté à la figure 1, on constate que l'injecteur de gaz 14 est relié par l'intermédiaire d'un conduit d'injection débouchant radialement dans le conduit 2 du brûleur à une vanne de sécurité 17 externe audit conduit 2 du brûleur, cette vanne de sécurité 17 étant disposée à proximité immédiate du conduit 2 pour réduire le couple de basculement qu'elle exerce sur le brûleur.

Dans la description qui suit, il est fait mention de l'axe du conduit 2 du brûleur, cet axe correspondant à l'axe longitudinal de la portion verticale du conduit 2 du brûleur.

Le réflecteur 3 est quant à lui conformé pour entourer le conduit 2 dudit brûleur. Il est assujetti à ce dernier vers l'extrémité dite basse de ce conduit. Généralement, ce réflecteur 3 est solidarisé audit conduit de manière étanche.

Le brûleur du dispositif de chauffage comporte encore une chambre de combustion 4 du mélange air/gaz située en extrémité du conduit 2 du brûleur et coaxiale au réflecteur 3.

Ce dispositif de chauffage se caractérise, selon l'invention, par la présence d'un écran 5 plein situé en-dessous et dans l'axe du conduit 2 du brûleur. Dans les exemples représentés, l'écran 5 est situé au-dessous de l'embouchure ou débouché du conduit 2 du brûleur et constitue au moins une partie de la face formant fond de la chambre de combustion 4. Toutefois, cet écran 5 pourrait également être positionné à l'extérieur de ladite chambre de combustion 4 au-dessous de cette dernière. Cet écran 5 coopère avec la chambre de combustion 4 pour d'une part stopper la chute de particules émanant de la combustion et d'autre part réduire l'intensité du rayonnement axial du dispositif de chauffage, supprimant ainsi une surchauffe centrale, cette surchauffe risquant de générer à terme un incendie.

La chambre de combustion 4 est généralement formée d'une embase 6 coaxiale au conduit 2 du brûleur, d'un fond constituant ledit écran plein 5 et d'une paroi périphérique 7 perforée reliant le fond et l'embase 6 de ladite chambre. Dans un mode de réalisation préféré de l'invention, la chambre de combustion 4 est formée d'une embase 6 coaxiale au conduit 2 du brûleur, en particulier à la portion verticale de ce conduit, cette embase 6 étant prolongée par une paroi périphérique 7 perforée en forme de tronc de cône dont la petite base est constituée par l'écran plein 5. Cet écran plein 5 peut être réalisé au moyen d'un plaque réfractaire. La paroi 7 tronconique périphérique de radiation de la chambre de combustion 4 est de préférence assujettie de façon souple à l'embase 6 de ladite chambre pour permettre sa dilatation au niveau de sa base sur le pourtour de l'embase. Cette paroi périphérique 7 constituant une grille est de préférence réalisée en métal tissé pour augmenter la proportion de vide, favorisant ainsi la combustion à l'intérieur de ladite chambre 4.

L'embase 6 de la chambre de combustion 4 est éloignée du réflecteur 3 de manière à créer un espace isolant E entre embase 6 et réflecteur 3. Dans l'exemple représenté, cette embase 6 est suspendue au conduit 2 du brûleur par l'intermédiaire d'entretoises 15 et de brides. Elle est par ailleurs solidaire de manière étanche de la paroi délimitant le conduit 2 du brûleur. Cette embase 6 est disposée dans la partie terminale du conduit 2 du brûleur comme le montrent les figures. Le rôle de l'espace isolant E sera décrit ci-après.

Le réflecteur 3 est quant à lui constitué d'un fond 8, de préférence plat, prolongé d'une paroi droite 9 inclinée. Cette paroi droite 9 est de préférence perpendiculaire au plan de la paroi périphérique 7 perforée de la chambre de combustion 4, pour élargir le flux radiant projeté. En effet, on sait que le rayonnement le plus efficace est celui qui est émis perpendiculairement à la surface qui l'émet. En conséquence, si on se réfère à la paroi périphérique 7 de la chambre de combustion 4, le fait que la paroi 9 du réflecteur 3 soit disposée sensiblement parallèle au rayonnement émis permet au réflecteur 3 de ne pas interférer sur ce rayonnement. Il en résulte une efficacité de chauffage maximale. En outre, ce réflecteur est conformé de manière à ne recouvrir qu'entre 40 et 60 % de la hauteur de la chambre de combustion 4.

Des trois caractéristiques décrites ci-dessus, il résulte une absence de confinement d'air chaud à l'intérieur du volume délimité par le réflecteur 3 et une réduction de la montée en température des parois du réflecteur 3. Ceci a pour conséquence que le réflecteur 3 est exempt d'une ouverture d'évacuation de l'air chaud et des fumées. En effet, dans tous les dispositifs de chauffage classiques, le réflecteur est pourvu d'une ouverture d'évacuation de l'air chaud et des fumées. Ceci est en particulier décrit dans le brevet EP-A-0.382.286 déjà mentionné ci-dessus. La présence de cette ouverture d'évacuation d'air chaud et des fumées oblige alors les utilisateurs à disposer l'ensemble du dispositif de chauffage de manière légèrement inclinée par rapport à l'horizontal. Généralement, cette inclinaison est de l'ordre de 10 degrés. Il en résulte que la configuration du dispositif de chauffage conçue pour une utilisation à l'horizontale du dispositif de chauffage ne remplit plus parfaitement sa fonction. Dans le cadre du dispositif de chauffage, objet de l'invention, du fait de l'absence de cette ouverture d'évacuation d'air chaud et de fumées rendue non nécessaire par la configuration du réflecteur et de la paroi périphérique de la chambre, il en résuite un positionnement à l'horizontale en fonctionnement dudit dispositif de chauffage. De ce fait, la configuration développée pour ce dispositif est utilisée de manière optimale en configuration fonctionnement du dispositif.

Le brûleur, dit de type torche est, comme cela a été précisé ci-dessus, constitué par un conduit de mélange air/gaz débouchant dans une chambre de combustion 4. La sortie de ce mélange air/gaz peut être pourvue d'une grille anti-retour de flamme classique disposée en sortie du conduit 2 du brûleur à l'intérieur de la chambre de combustion 4. Toutefois, dans un mode de réalisation préféré de l'invention, il est prévu, dans le prolongement du conduit 2 de mélange air/gaz, à l'intérieur de la chambre de combustion 4, une chambre de diffusion 10 d'un diamètre sensiblement égal au diamètre au conduit du brûleur. Cette chambre de diffusion 10 est formée d'une paroi perforée 11 possédant un fond plein 12, de préférence en forme de dôme, pour éviter l'encrassement de la chambre par accumulation de résidus. Cette chambre est appelée chambre de diffusion 10 car aucune combustion ne s'y produit. Cette absence de combustion est liée notamment à la dimension des perforations de la paroi 11. Dans les exemples représentés, la chambre de diffusion 10 est de forme générale cylindrique, le fond du cylindre correspondant au fond plein 12. La face supérieure de ce cylindre est ouverte et communique avec le conduit 2 du brûleur. Le bord supérieur de ce cylindre correspondant au bord supérieur de la paroi 11 est assujetti, de préférence par recouvrement, à l'embase 6 de la chambre de combustion 4.

Le principe de fonctionnement d'un tel dispositif de chauffage est le suivant. Le dispositif de chauffage étant supposé allumé, cet allumage ayant été effectué au moyen d'une flamme présentée au voisinage de la chambre de combustion 4, le gaz est acheminé par un conduit d'injection vers l'injecteur 14, puis à travers le venturi 13 et le mélange air/gaz est projeté dans la chambre principale de combustion 4, après diffusion par la chambre de diffusion 10, où la présence de la flamme provoque sa combustion. Au cours du fonctionnement, le régime de chauffe approprié est obtenu par variation du débit de gaz, cette variation du débit de gaz étant obtenue par une variation de la pression en entrée du gaz. En haut régime, le mélange air/gaz non enflammé est projeté à l'extérieur de la chambre de diffusion 10 à travers les perforations de la paroi 11 de cette dernière. Le mélange air/gaz ainsi projeté entre en combustion entre la paroi 11 de la chambre de diffusion 10 et la paroi 7 de la chambre de combustion 4. Cette dernière se trouve alors portée au rouge sur toute sa surface. En bas régime, la force de projection du mélange de combustion diminue. La combustion est plus faible entre la chambre de combustion 4 et la chambre de diffusion 10 et se rapproche de la paroi 11 de la chambre de diffusion 10. Au fur et à mesure que l'émission infrarouge de la paroi 7 de la chambre de combustion 4 diminue, celle de la paroi 11 de la chambre de diffusion 10 augmente. Cette paroi 11 rougit donc à son tour et devient l'émetteur infrarouge et lumineux en bas régime. La présence de poussières à l'intérieur du flux air/gaz ne perturbe absolument pas le fonctionnement. Du fait de la forme en dôme de la face pleine 12 de la chambre de diffusion 10, les poussières ont tendance à glisser le long des surfaces inclinées de ce dôme. Elles se retrouvent alors au contact de la paroi périphérique 11 de la chambre de diffusion 10. Selon le régime de fonctionnement, ces poussières sont soit, en bas régime de fonctionnement, pyrolysées, soit, en haut régime de fonctionnement, amenées, en raison du débit du mélange air/gaz, à rejoindre la chambre de combustion 4 en traversant ladite paroi périphérique 11 à travers les perforations ménagées dans cette paroi. L'écran 5, situé en-dessous de ce fond plein 12 de la chambre de diffusion 10, constitue une deuxième sécurité. Il empêche que des résidus en combustion puissent chuter au sol et enflammer la paille présente au sol. Il permet également de limiter un rayonnement central de la chambre de combustion 4, c'est-à-dire un rayonnement situé dans l'axe du conduit 2 du brûleur, évitant ainsi une surchauffe au sol dans la zone située directement au-dessous du dispositif de chauffage. Il devient alors possible de rapprocher le dispositif de chauffage du sol et de réduire ainsi sa hauteur de suspension, contrairement à l'ensemble des dispositifs de chauffage existants qui cherchent à concentrer le rayonnement dans un périmètre au sol de dimension réduite et situé directement en-dessous du dispositif de chauffage.

Bien évidemment, un tel dispositif de chauffage est équipé d'un grand nombre d'organes de sécurité et de réglage de la pression du gaz en entrée. Toutefois, ces organes ne seront pas décrits car ils sont parfaitement connus de l'homme de l'art.

## Revendications

1. Appareil de chauffage (1) du type infrarouge, notamment destiné au secteur agricole, pour le chauffage directionnel vers le bas des bâtiments d'élevage, cet appareil comprenant au moins un brûleur délimitant au moins un conduit d'alimentation en mélange gaz/air (2), un réflecteur (3) entourant le conduit (2) sur au moins une partie de sa longueur et une chambre (4) de combustion du mélange air/gaz située en extrémité dudit conduit (2) du brûleur et coaxiale au réflecteur (3) et un écran (5) plein situé en-dessous et dans l'axe du conduit (2) du brûleur,
**caractérisé en ce que** la chambre de combustion (4) du brûleur disposée coaxiale au réflecteur (3) est formée d'une embase (6) coaxiale au conduit (2) du brûleur, cette embase (6) étant prolongée par une paroi périphérique (7) perforée en forme de tronc de cône dont la petite base est constituée par l'écran (5) plein pour, d'une part, stopper la chute de particules émanant de la combustion, et d'autre part; réduire l'intensité du rayonnement axial de l'appareil en supprimant ainsi une surchauffe centrale.

2. Appareil de chauffage selon la revendication 1,
**caractérisé en ce que** ledit écran (5) est constitué par une plaque réfractaire.

3. Appareil de chauffage selon la revendication 2,
**caractérisé en ce que** l'embase (6) de la chambre de combustion (4) est éloignée du réflecteur (3) de manière à créer un espace isolant (E) entre embase (6) et réflecteur (3).

4. Appareil de chauffage selon l'une des revendications 2 et 3,
**caractérisé en ce que** le réflecteur (3) est constitué d'un fond (8) prolongé par une paroi (9) droite inclinée, de préférence perpendiculaire au plan de la paroi périphérique (7) perforée de la chambre de combustion (4), pour élargir le flux radiant projeté.

5. Appareil de chauffage selon l'une des revendications 1 à 4,
**caractérisé en ce que** le réflecteur (3) recouvre entre 40 et 60 % de la hauteur de la chambre de combustion (4).

6. Appareil de chauffage selon l'une des revendications 1 à 5,
**caractérisé en ce qu'**il est prévu, dans le prolongement du conduit (2) du brûleur à l'intérieur de la chambre de combustion (4), une chambre de diffusion (10) d'un diamètre sensiblement égal au diamètre du conduit (2) du brûleur, cette chambre de diffusion (10) étant formée par une paroi (11) perforée possédant un fond plein (12), de préférence en forme de dôme, pour éviter l'encrassement de la chambre par accumulation de résidus.

7. Appareil de chauffage selon l'une des revendications 1 à 6,
**caractérisé en ce que** le conduit d'alimentation en mélange gaz/air (2) du brûleur, qui comporte au moins une entrée d'air (16) de combustion primaire et renferme au moins un injecteur de gaz (14) et une chambre de mélange air/gaz, est organisé autour d'un axe vertical, l'injecteur de gaz (14) étant disposé axialement à l'intérieur du conduit (2) dans la partie haute de ce dernier et l'entrée d'air (16) étant disposée dans la partie haute du conduit (2), l'air débouchant axialement à l'intérieur dudit conduit (2) de telle sorte que l'air et le gaz circulent à l'intérieur du conduit (2) du brûleur suivant une trajectoire essentiellement verticale empêchant ainsi toute accumulation des poussières contenues dans l'air à l'intérieur dudit conduit (2).

8. Appareil de chauffage selon la revendication 7,
**caractérisé en ce que** l'injecteur de gaz (14) est relié par l'intermédiaire d'un conduit d'injection débouchant radialement dans le conduit (2) du brûleur à une vanne de sécurité (17) externe audit conduit (2) de brûleur, cette vanne (17) étant disposée à proximité immédiate du conduit (2) pour réduire le couple de basculement qu'elle exerce sur le brûleur.

## Patentansprüche

1. Heizgerät (1) zum Heizen mit Infrarotstrahlung, insbesondere für den landwirtschaftlichen Bereich, zum gerichteten Beheizen des Bodens von Zuchtgebäuden, wobei das Gerät aufweist wenigstens einen Brenner, der wenigstens eine Zuführleitung für eine Gas-/Luftmischung (2) begrenzt, einen Reflektor (3), der die Leitung (2) über wenigstens einen Teil ihrer Länge umgibt, und eine Brennkammer (4) für die Luft-/Gasmischung, die an einem Ende der genannten Leitung (2) des Brenners angeordnet ist und koaxial zu dem Reflektor (3) ist, und eine vollwandige Abschirmung (5), die unterhalb und in der Achse der genannten Leitung (2) des Brenners angeordnet ist, **dadurch gekennzeichnet, daß** die Brennkammer (4) des Brenners, die koaxial zu dem Reflektor (3) angeordnet ist, durch einen Ansatz (6) gebildet ist, der koaxial zu der Leitung (2) des Brenners ist, wobei dieser Ansatz (6) durch eine perforierte Umfangswandung verlängert ist, die als Stumpf eines Kegels ausgebildet ist, dessen kleine Basis durch die vollwandige Abschirmung gebildet ist, um einerseits das Herabfallen von Partikeln, die von der Verbrennung stammen, zu stoppen und andererseits die axiale Strahlungsintensität des Gerätes zu verringern und so eine zentrale Überhitzung zu vermeiden.

2. Heizgerät nach Anspruch 1, **dadurch gekennzeichnet, daß** die genannte Abschirmung (5) durch eine hitzebeständige Platte gebildet ist.

3. Heizgerät nach Anspruch 2, **dadurch gekennzeichnet, daß** der Ansatz (6) der Brennkammer (4) zu dem Reflektor (3) beabstandet ist, um einen isolierenden Raum (E) zwischen dem Ansatz (6) und dem Reflektor (3) zu bilden.

4. Heizgerät nach einem der Ansprüche 2 und 3, **dadurch gekennzeichnet, daß** der Reflektor (3) durch einen Boden (8) gebildet ist, der durch eine gerade, geneigte Wandung (9) verlängert ist, vorzugsweise senkrecht zu der Ebene der perforierten Umfangswandung (7) der Brennkammer (4), um den beabsichtigten Strahlungsfluß zu vergrößern.

5. Heizgerät nach einem der Ansprüche 1 bis 4, **dadurch gekennzeichnet, daß** der Reflektor (3) zwischen 40 und 60 % der Höhe der Brennkammer (4) einnimmt.

6. Heizgerät nach einem der Ansprüche 1 bis 5, **dadurch gekennzeichnet, daß** in der Verlängerung der Leitung (2) des Brenners im Inneren der Brennkammer (4) eine Diffusionskammer (10) vorgesehen ist, deren Durchmesser im wesentlichen dem Durchmesser der Leitung (2) des Brenners entspricht, wobei diese Diffusionskammer (10) durch eine perforierte Wandung (11) gebildet ist, die einen vollwandigen Boden aufweist, vorzugsweise in Form eines Domes, um die Verschmutzung der Kammer durch Anlagerung von Rückständen zu verhindern.

7. Heizgerät nach einem der Ansprüche 1 bis 6, **dadurch gekennzeichnet, daß** die Speiseleitung für die Gas-/Luftmischung (2) des Brenners, die wenigstens einen Lufteintritt (16) für eine primäre Verbrennung aufweist und wenigstens einen Gasinjektor (14) und eine Luft-/Gasmischkammer umfaßt, um eine vertikale Achse herum angeordnet ist, wobei der Gasinjektor (14) axial zum Inneren der Leitung (2) in dem oberen Teil der letzteren angeordnet ist und der Lufteintritt (16) in dem oberen Teil der Leitung (2) angeordnet ist, wobei die Luft axial in das Innere der genannten Leitung (2) derart mündet, **daß** die Luft und das Gas im Inneren der Leitung (2) des Brenners entlang einer im wesentlichen vertikalen Trajektorie zirkulieren und auf diese Weise jede Ansammlung von in der Luft enthaltenen Stäuben im Inneren der genannten Leitung (2) verhindern.

8. Heizgerät nach Anspruch 7, **dadurch gekennzeichnet, daß** der Gasinjektor (14) vermittels einer Injektionsleitung, die radial in die Leitung (2) des Brenners mündet, mit einem Sicherheitsventil (17) verbunden ist, das außerhalb der genannten Leitung (2) des Brenners angeordnet ist, wobei dieses Ventil (17) in unmittelbarer Nähe zu der Leitung (2) angeordnet ist, um das auf den Brenner ausgeübte Kippmoment zu verringern.

## Claims

1. Heating apparatus (1) of the infrared type, more especially intended for the agricultural sector, for the downward directional heating of farm buildings, this apparatus comprising at least one burner defining at least one supply line (2) for supplying a gas/air mixture, a reflector (3) surrounding the line (2) over at least one portion of its length, and a combustion chamber (4) for the air/gas mixture situated at the end of said line (2) from the burner and coaxial with the reflector (3), and a full screen (5), situated below the burner and in the axis of the line (2) from the burner, **characterised in that** the combustion chamber (4) of the burner, disposed coaxially with the reflector (3), is formed from a base (6) coaxial with the line (2) from the burner, this base (6) being extended by a peripheral, frustoconical, perforated wall (7), the small base of which is formed by the full screen (5) to stop, on the one hand, the fall of particles arising from the combustion and to reduce, on the other hand, the intensity of the axial radiation of the apparatus by thereby suppressing central overheating.

2. Heating apparatus according to claim 1, **characterised in that** said screen (5) is formed by a refractory plate.

3. Heating apparatus according to claim 2, **characterised in that** the base (6) of the combustion chamber (4) is remote from the reflector (3), so as to create an insulating space (E) between base (6) and reflector (3).

4. Heating apparatus according to one of claims 2 and 3, **characterised in that** the reflector (3) is formed from a base (8), extended by an upright, inclined wall (9), preferably perpendicular to the plane of the perforated peripheral wall (7) of the combustion chamber (4), to widen the projected radiant flow.

5. Heating apparatus according to one of claims 1 to 4, **characterised in that** the reflector (3) covers between 40 and 60 % of the height of the combustion chamber (4).

6. Heating apparatus according to one of claims 1 to 5, **characterised in that** a diffusion chamber (10) is provided in the extension of the line (2) from the burner to the interior of the combustion chamber (4), said diffusion chamber having a diameter substantially equal to the diameter of the line (2) from the burner, this diffusion chamber (10) being formed by a perforated wall (11) having a full base (12), preferably dome-shaped, to avoid the chamber becoming contaminated by an accumulation of residues.

7. Heating apparatus according to one of claims 1 to 6, **characterised in that** the line (2) for supplying a gas/air mixture from the burner, which has at least one air inlet (16) of primary combustion and surrounds at least one gas injector (14) and a chamber for the air/gas mixture, is organised around a vertical axis, the gas injector (14) being disposed axially inside the line (2), in the top portion thereof, and the air inlet (16) being disposed in the top portion of the line (2), the air being supplied axially to the interior of said line (2), so that the air and the gas circulate inside the line (2) from the burner according to an essentially vertical trajectory, thereby preventing any accumulation of dust, contained in the air, inside said line (2).

8. Heating apparatus according to claim 7, **characterised in that** the gas injector (14) is connected by means of an injection line, which terminates radially in the line (2) from the burner at a safety valve (17) externally of said burner line (2), this valve (17) being disposed in the immediate proximity of the line (2) to reduce the oscillation torque which it exerts on the burner.
